# EUROPEAN PATENT APPLICATION

(11) **EP 4 425 290 A1**
(43) Date of publication of application: **04.09.2024**
(21) Application number: 23159784.0
(22) Date of filing: 02.03.2023
(51) Int. Cl.: G05D 1/00, G05B 17/02

(54) **DIGITAL-TWIN-SYSTEM FOR TELEOPERATION OF AN OBJECT**

(71) Applicant: Imperium Drive, London WC2A 2JR (GB)
(72) Inventor: Gangakhedkar, Sandip, London, WC2A 2JR (GB); Nourani-Vatani, Navid, London, WC2A 2JR (GB); Park, Sangyoung, London, WC2A 2JR (GB); Kremer, Philipp, London, WC2A 2JR (GB)
(74) Representative: Paustian & Partner Patentanwälte mbB

(57) **Abstract**

Disclosed is a computer-implemented digital-twin-system for teleoperation of an object, configured to:
- obtain environment information comprising information about a TO-object, about one or more static objects and about one or more dynamic objects, wherein the information about the TO-object and of at least one of other objects is obtained from different information sources;
- provide information about the TO-object and one or more of the dynamic objects related to one or more of the static objects to a teleoperator interface;
- obtain control information for the TO-object from the teleoperator interface based on the provided information;
- provide a control input to the TO-object based on the environment information and/or on the control information.

## Description

### Technical field

This disclosure is related to computer-implemented digital-twin-systems for teleoperation of an object and to teleoperator interfaces for displaying and receiving information to control a teleoperated object in an environment.

### Background

Today, teleoperation of almost any device or vehicle, from remote surgery to remote driving, is done by sending images from a local environment to a remote teleoperator. The remote teleoperator needs to gain situational awareness of the object to perform the remote operation task.

However, sending images requires a relatively large data bandwidth. This is particularly hard to accomplish when driving a vehicle at high-speed using a teleoperator workstation that is connected to the teleoperated object through the public internet and/or cellular networks. In practice 4 to 6 HD image streams must be sent to capture the situation around a vehicle and an image frame must be sent roughly every 0.5 m of movement. If the teleoperated object moves at 15 m/s, this can correspond to a data stream of 360 Mpixel/s (= 2 Mpixel/image × 15 m/s / 0.5 m × 6 cameras). Better solutions are desirable.

### Description

An object of the embodiments disclosed in the following is to improve teleoperation of objects in environments with other dynamic and/or static objects.

This problem is solved by the disclosed embodiments, which are in particular defined by the subject matter of the independent claims. The dependent claims provide further embodiments. In the following, different aspects and embodiments are disclosed, which provide additional features and advantages. Some embodiments of the present disclosure solve this problem by sending no images to the remote teleoperator. Instead, the remote teleoperator operates based on a digital representation, a digital twin, of the real environment. In this digital twin, static objects of the environment are digitized (or "mapped") based on a single piece of information. Information about dynamic objects and the teleoperated object are measured regularly and inserted into the digital representation through channels that are independent of the mapping of the static objects. In the case of a teleoperated vehicle, the digital representations of where the vehicle is located (and driven), i.e., the city streets, surrounding trees, surrounding houses, etc., are imported into the digital twin once, e.g., by a picture of the environment. Additionally, the location, the movement, and the status of the teleoperated vehicle, of surrounding vehicles, of pedestrians, and of traffic lights are periodically captured for their representation in the digital twin. All information is then sent to a teleoperator workstation so that a teleoperator can control the vehicle in the local environment.

In the remainder, further aspects and embodiments of these aspects are disclosed.

A first aspect relates to a computer-implemented digital-twin-system for teleoperation of an object, configured to:
- obtain environment information comprising information about a TO-object, about one or more static objects and about one or more dynamic objects, wherein the information about the TO-object and of at least one of the other objects is obtained from different information sources;
- provide information about the TO-object and one or more of the dynamic objects related to one or more of the static objects to a teleoperator interface;
- obtain control information for the TO-object from the teleoperator interface based on the provided information;
- provide a control input to the TO-object based on the environment information and/or on the control information.

One aspect of the embodiments of this disclosure relates to using a complex digital representation of an environment for teleoperation of an object rather than using only an image feed.

An environment in the sense of this disclosure can be any environment in which an object can be operated or teleoperated, i.e. operated from a distance. An environment can in particular be a street/traffic environment for teleoperated objects such as cars, lorries, and motorcycles. An environment can also be an aerial space in which planes, helicopters, and drones can be teleoperated. Additionally or alternatively, an environment can be a maritime environment in which ships, boats and underwater vehicles can be teleoperated. An environment can also comprise different of the aforementioned types of environments. Environment information can come from the respective objects themselves, or from other objects or infrastructure that is able to observe the respective objects. E.g. information about a teleoperated object or a dynamic object can come from a mobile phone of vehicle passengers.

Dynamic objects in the sense of this disclosure can be objects that change their states relevant for a teleoperation. In particular dynamic objects can be of the same type as the teleoperated objects. Additionally or alternatively, dynamic objects can be objects that are not controlled by a human or automatically, such as pedestrians.

Static objects in the sense of this disclosure can be any part of an environment that does not change its states relevant for a teleoperation or at least does change the respective state or states only slowly. Static objects can be a tree, a street, or an infrastructure device, an aerial or maritime space, etc. An environment of a teleoperated object can be comprised of all dynamic and/or static objects. Static object may comprise roadside infrastructure. Static objects can be inferrred directly from the dynamic objects, e.g., by looking at where and how they move in an empty space. Additionally or alternatively, static objects might not be communicated to the working station over the digital twin system, but the digital twin should know about them.

Information about one or more static objects of an environment can be mapped and/or stored in advance. Information about one or more dynamic objects can be provided into the digital twin via different information sources than the information about the teleoperated object and/or one or more static objects.

Obtaining information can comprise receiving the information and/or fetching the information, e.g., from a shared memory located in a network or cloud.

Providing information to a teleoperator interface can comprise sending the information or providing it such that the intended receiver can fetch the information, e.g., from a shared memory located in a network or cloud.

A teleoperator interface in the sense of this disclosure can be a hardware setup with display and input devices for a human teleoperator. Furthermore, a teleoperator interface can be a generic interface to be connected to an automatic teleoperator, e.g., driven by an artificial intelligence.

An information source in the sense of this disclosure can comprise one or more sensors, e.g., encoder, lidar, radar, etc.

The information about the teleoperated object and/or the one or more dynamic objects provided to the teleoperator interface needs not necessarily comprise information about one/or more static objects, i.e. environmental information. However, the information about the teleoperated objects and the one or more static objects needs to be intelligible in the context of the environmental information. Therefore, the different information types need to be dependent upon each other, e.g., by being in the same coordination framework. In this way they can be understood together at the teleoperator interface even if the environmental information is not provided to the teleoperator interface by the digital twin system.

Control input and control information in the sense of this disclosure can be any information that can be used to control the teleoperated object, e.g. position-based information. Position-based information, can be any information based on a position, e.g., distance, position itself, velocity, acceleration, jerk, etc. The control information can be either based on environmental information, which means that the digital twin system directly closes the control loop to the teleoperated device. E.g., the digital twin system can send information about the surrounding of the teleoperated object to the teleoperated object. In one embodiment the digital twin system receives information about an object from a third source (a dynamic or a static object). If the teleoperated object has not yet seen or received this information or if it cannot see it, then the digital twin system can send this information to the teleoperated object, e.g. to improve safety of its operation.

Additionally or alternatively, the control information can be based on the information provided by a human teleoperator over a teleoperator workstation or by an automatic teleoperator. In this case, the digital twin system can either pass through the control information from the teleoperator or it can provide a control input that is based on the control information but further processed.

Technical parameters of a dynamic object, such as status, type, location, position-based information, force information can be captured using onboard sensor systems of a respective dynamic object. In the same way information about the teleoperated object can be obtained. Additionally or alternatively, information about the teleoperated object and/or a dynamic object can be provided by the respective sensors of other vehicles (V2X) and/or by sensors of infrastructure systems (I2X).

A time delay caused by the processing or by the communication of information related to the teleoperated object and/or a dynamic object can be determined in the digital twin system. Provided information on location, pose, speed, acceleration, force, etc. of the teleoperated object and of dynamical objects can take the time delay into account. The remote operator can adjust the view and settings of their digital twin for optimal operation given actual traffic conditions.

An embodiment of the first aspect relates to a computer-implemented digital-twin-system for teleoperation of an object, configured to assign an object description model (ODM) to the TO-object, to one or more of the static objects and/or to one or more of the dynamic objects.

An object description model (ODM) in the sense of this disclosure can be any description of an object or of a class of objects that can be applied by the digital twin system in order to digitally model the teleoperator in the environment. An ODM can provide static information about an object, e.g. a visual representation. Additionally or alternatively, an ODM can provide kinematic and/or dynamic information about an object, e.g. a motion model. A motion model can, e.g., be a mathematical model for the kinematic and/or dynamical movement of a dynamic object or of the teleoperated object.

An embodiment of the first aspect relates to a computer-implemented digital-twin-system for teleoperation of an object, configured to assign a first ODM to a first object and a second ODM to a second object.

The first and second objects can be either teleoperated objects, dynamic objects, or static objects. Thereby, different ODMs can be assigned to different objects. This increases the accuracy of the representation of the environment in the digital-twin-system. The different ODMs can be based on different object classes. E.g., passenger cars can be represented by a first type of ODM, and lorries can be represented by a second type of ODM. This differentiation can be increased to the point where each object has a unique ODM.

An embodiment of the first aspect relates to a computer-implemented digital-twin-system for teleoperation of an object, configured to generate one or more of the ODMs on previous information obtained about the one or more static objects and/or the one or more dynamic objects.

The environment information about an object can comprise information to model this object. Hence, based on received information an ODM can be generated and/or adapted to provide a better fit for its respective object. In particular an adaptation of the model can be based on machine learning techniques, e.g. generative adversarial networks, or similar statistical methods.

An embodiment of the first aspect relates to a computer-implemented digital-twin-system for teleoperation of an object, configured to assign a second ODM to the TO-object or to one or more of the static objects and/or one or more of the dynamic objects.

E.g., based on already received environment information the digital-twin-system can recognize that an ODM assigned to an object does not provide a good fit. E.g., based on a comparison between estimated and measured information about the object. Then another ODM can be assigned to this object. Additionally or alternatively, the first ODM needs not to be deleted. The second model can be assigned additionally to the first ODM of the object. Both ODMs can be run concurrently and the result which is more suitable can be selected and provided to the teleoperator interface. Additionally or alternatively, different ODMs can be assigned to an object because the different ODM describe different parameters. E.g., a first ODM might describe a visual representation of the object and a second ODM might describe a motion behavior of the object.

An embodiment of the first aspect relates to a computer-implemented digital-twin-system for teleoperation of an object, configured to:
- obtain information about a first dynamic object with a lower update frequency than about a second dynamic object; and/or
- provide information to the teleoperator interface about a first dynamic object with a lower update frequency than about a second dynamic object.

Environment information about an object can be important or less important for the teleoperation. Therefore, an update frequency of information of a certain object might be slower than the update frequency of information of a more important object. This differentiation can be performed at the receiving side of the digital-twin-system or at the sending side of the digital-twin-system. For the first alternative, the digital-twin-system can communicate to one or more objects how often it wants to be updated about these objects. Additionally or alternatively, such an instruction can also be sent to an infrastructure system that observes an object. Such an instructed update frequency can range from 1 ms to several seconds. For the second alternative, the environment information at the digital-twin-system regarding one or more objects can be provided to the teleoperator interface at different update frequencies.

An update regime can consist of updating the information about one, more, each object independently differently or asynchronously. In particular one or more objects can be instructed to only provide information to the digital-twin-system if a predefined condition is met. Or the digital-twin-system can provide information to the teleoperator interface, only if a certain condition is met. Such a condition can be based on a distance below a predefined distance or the increase above a predetermined speed.

An embodiment of the first aspect relates to a computer-implemented digital-twin-system for teleoperation of an object, configured to estimate position-based information about the TO-object and/or about one or more of the dynamic objects based on a communication delay, on a measurement accuracy, and/or on a model confidence of the ODM.

Communication delay can comprise communication delay from the environment to the digital-twin-system and/or backwards. Additionally or alternatively, communication delay can comprise communication delay from the digital-twin-system to the teleoperator interface and/or backwards. Communication delay can also relate to processing delay in the digital-twin-system.

The estimated position-based information may be provided to the teleoperator interface. Additionally or alternatively, a control input can be provided to the teleoperated object based on the estimated position-based information, in particular without control information from the teleoperator interface. The latter can be in particular the case for safety-critical situations, when the digital twin system can infer without information from the teleoperator that it must adapt the position, velocity, or acceleration of the teleoperated object, e.g., as in the next embodiment.

An embodiment of the first aspect relates to a computer-implemented digital-twin-system for teleoperation of an object, configured to provide control information to stop the TO-object, if:
- a distance between the estimated positions of the TO-object and about a static and/or a dynamic object falls below a pre-defined threshold or is zero.

The pre-defined threshold can be e.g., 1 m, 2 m, 5 m. Additionally or alternatively, the pre-defined threshold can be dependent on a velocity and/or acceleration of the teleoperated object and/or the other object. Advantageously, an appropriate threshold can be pre-defined upon which the teleoperated object is stopped. Instead of stopping the teleoperated object the digital-twin-system can also provide control input such that the teleoperated object changes position-based information to avoid a potential collision.

An embodiment of the first aspect relates to a computer-implemented digital-twin-system for teleoperation of an object, configured to update environment information about one or more of the dynamic objects to the teleoperator interface based on:
- position-based information, in particular velocity information, of a respective dynamic object;
- a measurement accuracy and/or a communication delay related to the measured information about a respective dynamic object;
- a model confidence of the ODM assigned to a respective dynamic object.

The update can be more frequent if the estimation of the position-based information is uncertain. This can be, e.g., if the object moves fast and/or randomly. This can also be the case if a measurement accuracy of the environment information is low and/or a measurement signal is delayed. The third alternative is related to a description accuracy of the ODM assigned to the object. If a model confidence, which describes the description accuracy of the model, is low then the predictions of the model are uncertain. In this case it can also be advantageous to increase the update frequency of the information about the object to decrease the necessity for predictions.

An embodiment of the first aspect relates to a computer-implemented digital-twin-system for teleoperation of an object, configured to be located near or at the teleoperator interface, in particular in the same network domain and/or on the same computer.

In this embodiment the digital-twin-system can be, for example, a software module that interacts closely with a teleoperator interface and in particular with its different hardware components. In such a form the digital-twin-system can be delivered together with the teleoperator interface. The digital-twin-system can also be co-located with the teleoperator interface or located in the vicinity of the teleoperator interface. Advantageously, if the digital-twin-system sends high resolution images to the teleoperator interface, this information needs not to be sent through a large network, which might induce network delay.

An embodiment of the first aspect relates to a computer-implemented digital-twin-system for teleoperation of an object, configured to be located distant from the teleoperator interface, in particular at the TO-object, at a static object, and/or in a computer network cloud.

Advantageously, in the vicinity of the environment the information to be obtained or to be sent to the teleoperator interface can be reduced.

In an embodiment the digital-twin-system can be located in the teleoperated object, in a dynamic object and/or in a static object. E.g., the digital-twin-system can be located at a roadside infrastructure, in particular a type of roadside infrastructure configured to observe a traffic of vehicles. Additionally or alternatively, the digital-twin-system can be located dynamically at the edge of the network relative to a (moving) TO-object. Advantageously by a location at the edge of a network communication delays for communication between the teleoperated object and a network can be reduced and on the same time superior computation capabilities of a large network or roadside infrastructure can be used to provide direct feedback to the teleoperated object and/or to provide the processed environment information to the teleoperator interface.

An embodiment of the first aspect relates to a computer-implemented digital-twin-system for teleoperation of an object, configured to provide a processed, in particular delayed, control information as control input to the TO-object.

In case of uncertain position-based information, e.g., due to noisy measurements, network delays or low ODM-confidence, a control information from the teleoperator interface might comprise the risk of a collision if it were directly passed through to the teleoperated object. By further processing this information, e.g., by adding a further delay or by adapting a position-based information of the control information, the risk can be reduced or avoided.

An embodiment of the first aspect relates to a computer-implemented digital-twin-system for teleoperation of an object, configured to:
- obtain a status information of a communication channel between the digital-twin-system and at least one of the TO-object, the static objects, and the dynamic objects; and/or
- obtain a status information of a communication channel between the digital-twin-system and the teleoperator interface; and/or
- obtain a status information of a communication channel between the teleoperator interface and at least one of the TO-object, the static objects, and the dynamic objects.

Status information comprises network status from the teleoperated object, a dynamic object and/or a static object. E.g., network status information can be provided by a vehicle driving in front of the teleoperated object. Additionally or alternatively, the digital-twin-system can also receive updates about the teleoperated object, static objects and/or a dynamic objects from a third object in the vicinity of the teleoperated object. Additionally or alternatively, an intermediate entity, e.g., a real-time HD-mapping provider, can provide network status information.

In one embodiment the digital-twin-system uses information about the communication channel between the teleoperated object and the teleoperator interface to decide what information is passed directly from the teleoperated object to the teleoperator interface and which information is provided as environment information from the digital-twin-system to the teleoperator interface. E.g., if network communication is low, the digital-twin-system can decide that information about all static objects and/or some dynamic objects can be communicated directly to the teleoperator interface from the teleoperated object. And only the information about the teleoperated object and one or more dynamic objects that fulfill certain requirements, e.g., which are close to the teleoperated object, are communicated to the teleoperator interface from the digital-twin-system. Advantageously, this saves bandwidth for the communication channel between the digital-twin-system and the teleoperation interface.

An embodiment of the first aspect relates to a computer-implemented digital-twin-system for teleoperation of an object, configured to interface with an automatic motion control system, AMCS, of the TO-object and, in particular, to provide commands to the AMCS which:
- are addressed to a subsystem of the TO-object, e.g. a braking system, and/or
- comprise position-based information.

In case of a teleoperated vehicle, the AMCS can be an advanced driver assistance system (ADAS) function such as Adaptive Cruise Control (ACC) or a vehicle control interface based on the Controller Area Network (CAN) protocol. In one embodiment the digital-twin-system can run multiple scenarios based on the obtained information from the environment and/or the teleoperator interface and forward the most appropriate result to the teleoperated object. Additionally or alternatively, the digital-twin-system can send various motion commands to the teleoperated object with varying abstraction/details, e.g., everything from the low-level commands, e.g., for a drive-by-wire actuator, and/or higher-level commands for in-vehicle ADAS components, e.g. a velocity reference for an automatic cruise control and/or actual trajectories. Advantageously, thereby the digital-twin-system can interface directly with the TO-object.

An embodiment of the first aspect relates to a computer-implemented digital-twin-system for teleoperation of an object, configured to provide information for a configurable perspective of the environment to the teleoperator interface.

The digital-twin-system can model the behavior of the teleoperated object and/or of the dynamic objects. Therefore, advantageously it can provide information to the teleoperator interface that is independent from the perspective in which the teleoperated object is depicted at the teleoperator interface. Additionally or alternatively, it can provide information about a selected perspective to the teleoperator interface. Advantageously, this increases the flexibility for the teleoperator to select a perspective that is most suitable for her/him.

An embodiment of the first aspect relates to a computer-implemented digital-twin-system for teleoperation of an object, wherein the information about a configurable perspective is dependent on:
- a velocity, of the TO-object;
- a maneuver performed by the TO-object
- a traffic situation in the environment;
- a distance between the TO-object and a static object and/or a dynamic object.

An embodiment of the first aspect relates to a computer-implemented digital-twin-system for teleoperation of an object, configured to provide information about the uncertainty of a position-based information about the TO-object and/or at least one of the other objects to the teleoperator interface.

The information about the uncertainty of a measurement of a position-based information can be provided e.g., as a variance of the measurement.

A second aspect relates to a teleoperator interface for displaying and receiving information to control a TO-object in a distant environment, configured to:
- obtain information from a computer-implemented digital-twin-system, about a TO-object, one or more static objects and/or one or more dynamic objects in a distant environment;
- providing control information to the digital-twin-system and/or to the TO-object to control the TO-object.

An embodiment of the second aspect relates to a teleoperator interface for displaying and receiving information to control a TO-object in a distant environment, configured to connect concurrently to the TO-object and/or to one or more of the other objects in the distant environment, to obtain information from the distant environment, in particular acoustic information, visual information and/or information about one or more dynamic and/or static objects.

In one embodiment the teleoperator interface only obtains from the digital-twin-system a subset of information needed to display a full environmental scenario. E.g., if network communication is low, the digital-twin-system can decide that information about all static objects and/or some dynamic objects is to be communicated directly to the teleoperator interface from the teleoperated object. In this case the teleoperator interface will communicate in parallel with the teleoperated object in order to obtain the remaining information to an environmental scenario from the teleoperated object and/or from a static or dynamic object in the environment, e.g., a roadside infrastructure configured to observe a traffic situation in the environment that comprises the teleoperated object.

A third aspect relates to a computer program product comprising computer-executable code that, when executed by a processor, causes the processor to:
- generate and operate a digital-twin-system according to any of the preceding claims.

### Short Description of the Figures

Further advantages and features result from the following embodiments, which refer to the figures. The figures describe the embodiments in principle and not to scale. The dimensions of the various features may be enlarged or reduced, in particular to facilitate an understanding of the described technology. For this purpose, it is shown, partly schematized, in:
Fig. 1 a general architecture of a teleoperation system with a digital twin according to embodiments of the present disclosure;
Fig. 2 a perspective of an environment with teleoperated object, static objects, and dynamic objects according to embodiments of the present disclosure;
Fig. 3 a method to consider uncertainties when representing the teleoperated object or a dynamic object according to embodiments of the present disclosure;
Fig. 4 a part of an ODM describing static aspects of a vehicle according to embodiments of the present disclosure;
Fig. 5 a chart depicting an information processing flow for an update of a digital twin system according to embodiments of the present disclosure.

In the following descriptions, identical reference signs refer to identical or at least functionally or structurally similar features.

In the following description reference is made to the accompanying figures which form part of the disclosure, and which illustrate specific aspects in which the present disclosure can be understood.

In general, a disclosure of a described method also applies to a corresponding device (or apparatus) for carrying out the method or a corresponding system comprising one or more devices and vice versa. For example, if a specific method step is described, a corresponding device may include a feature to perform the described method step, even if that feature is not explicitly described or represented in the figure. On the other hand, if, for example, a specific device is described on the basis of functional units, a corresponding method may include one or more steps to perform the described functionality, even if such steps are not explicitly described or represented in the figures. Similarly, a system can be provided with corresponding device features or with features to perform a particular method step. The features of the various exemplary aspects and embodiments described above or below may be combined unless expressly stated otherwise.

### Description of the Figures

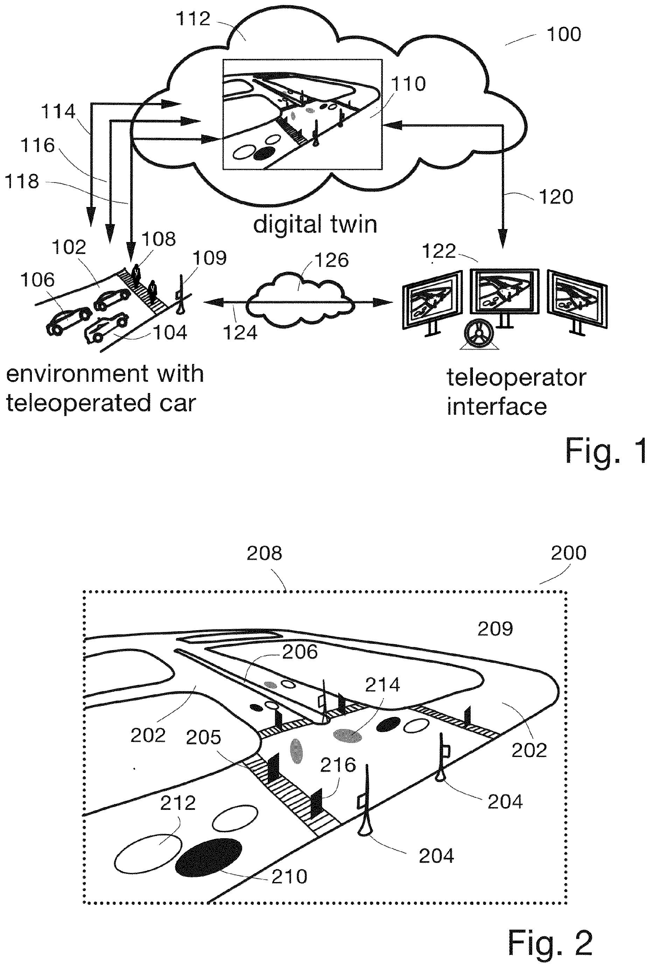

Fig. 1 illustrates an architecture 100 of teleoperated driving in an urban scenario utilizing a digital twin system 110 for a remotely controlled car 104, according to one embodiment. The upper part of the Fig. 1 describes the digital twin, and the lower part describes the physical world that comprises the environment with the teleoperated car 104 and the distant teleoperator interface 222. The arrows 114, 116, 118, 120 between the upper part and the lower part describe the communication between the digital twin and the real world.

One component of the physical world is the teleoperated vehicle 104. The teleoperated vehicle 104 can be equipped with actuators, perception sensors and a communication interface capable of streaming data to the remote operator interface. It can also be able to execute commands received from the teleoperator at the teleoperator interface/workstation 122. Various sensors can be on board the teleoperated vehicle 104 such as one or more of a camera, a RADAR, an ultrasonic sensor, and/or a LIDAR. A teleoperated vehicle 104 can be equipped with multiple cameras facing to the front, to the sides and to the rear to provide information to the teleoperator. The data from these sensors can be processed onboard, relevant information can be extracted from these, and sent.

Another component of the physical world can be communication and roadside infrastructure 109. The communication and roadside infrastructure 109 can enable real-time streaming of sensor data to the teleoperator and delivers teleoperation commands back to the vehicle. Bandwidth and latency of the communication network that is connected to the communication and roadside infrastructure 104 are important technical parameters for teleoperation. A network status can be monitored to provide reliable information to the teleoperator and/or to the digital-twin-system.

Communication and roadside infrastructure 109 can comprise other sources of information such as roadside sensors, e.g. roadside cameras. One or more roadside units can transmit a status of traffic signals and/or other traffic participants, such as other vehicles 106 or pedestrians 108. Such information can be used together with data from the teleoperated vehicle 104 to improve the telepresence of the teleoperator, while avoiding to provide the same information as part of a video stream. E.g. the traffic light 109 can transmit its own status. This can support a vision system, because the teleoperator can rely on information directly from the traffic light 109 instead of detecting the traffic light status by image processing using a vision system.

The third component is the teleoperator workstation 122. The teleoperator workstation can comprise an immersive interface that can allow a teleoperator to interact with the vehicle 104. For example, a teleoperator workstation 122 can involve one or multiple displays, projections, or a virtual reality setup. Additionally or alternatively, a teleoperator workstation can comprise an HMI possibly comprising a steering wheel, an acceleration pedal, a brake pedal, a mouse and/or other computer interaction devices.

The teleoperator will interpret the information provided by the teleoperator workstation 122 to make driving decisions, i.e. requesting steering and acceleration commands, which are then communicated back to the vehicle 104.

The digital-twin-system interfaces with the teleoperated car or an external data provider to exchange static environmental information over the communication channel 114. Types of this information are depicted in Fig. 2. Information exchanged over communication channel 114 can relate to objects that do not change and do not provide any further information except from their static presence in the environment, e.g. streets 202, street crossings 205, lane separations 206, or street surroundings 209. The communication channel 114 can be a one-time communication channel, because the static information can be only exchanged once.

The digital-twin-system interfaces with the teleoperated car to exchange further static environmental information over the communication channel 116. Types of this information are also depicted in Fig. 2. Information exchanged over this communication channel can relate to static objects that provide further information, e.g. traffic lights 204. The communication channel 116 can be constantly updated or updated if new information occurs, e.g. a traffic light signal changes.

The digital-twin-system interfaces with the teleoperated car to exchange further dynamic environmental information and information of the teleoperated car over the communication channel 118. Information exchanged over this communication channel can relate to dynamic objects, such as cars 104, 106, bicycles, pedestrians 108, etc. The communication channel 118 can be constantly updated and/or updated if new information occurs, e.g. a traffic light signal changes.

The digital twin system 110 can allow the teleoperator to control the content visible to her/him and how she/he views this content. The digital twin system 110 can allow the user to hide and show content, e.g. hiding bushes and buildings to be able to look "around the corner". Additionally or alternatively, the digital twin system 110 can allow the user to highlight important objects, e.g. coloring road users of interest in a different color to ensure they are more visible. Additionally or alternatively, the digital twin system can allow the user to adjust the lighting to ensure a more pleasant environment, e.g. by removing shadows, direct sun light, etc. the user can ensure he has the perfect visibility, even though the real car is operating in rain at night. Additionally or alternatively, the digital twin system 110 can allow the user to change the perspective, e.g., a viewpoint to ensure she/he has the best view of the surrounding, e.g., switching to overhead view for parking maneuvers and to a "first person shooter" view for normal driving, to ensure an optimal view for the task.

The digital twin system 110 can make use of massive amount of raw and processed data generated from onboard sensors, perception algorithms and from other road users and roadside infrastructure.

The digital-twin-system depicted in Fig. 1, can be configured such that the digital-twin-system runs in cloud 112. Additionally or alternatively, it can be configured such that the digital-twin-system runs on computing nodes from both the vehicle 104 and from the operator workstation 122. The digital-twin-system can be configured as a shared computer-implemented application. On the vehicle side, an object tracking algorithm can keep a record of objects, i.e., position, speed, size, and type, in the surrounding environment. This information is streamed to the teleoperator workstation 122 directly and/or to the digital-twin-system 110. Objects in the environment of the teleoperated car can exchange information with the teleoperator interface directly by the communication channel 124 that operates through a network or cloud 126.

The embodiments illustrated by Fig. 1 are not constraint to specific implementations. Rather it should become clear that digital copies of the teleoperated vehicle's surrounding environment on the vehicle side and the teleoperator side are synchronized to the physical world. As there is restricted bandwidth and latency in the communication link between the vehicle and operator workstation, minimizing the time distortion and maximizing the accuracy are the key challenges in the digital twin implementation.

Fig. 2 depicts the information comprised in a digital twin 110 in more detail. Thereby, a certain perspective 208 has been selected by the digital twin for representation of the environment. Static objects 202, 206, 209 were obtained by the digital twin via a map provider (over channel 114 of Fig. 1). This also holds for the body and the location of the traffic light. The signals of the traffic light however are communicated in real-time (over communication channel 116 in Fig. 1). Furthermore, it is shown how dynamic objects of the environment and the teleoperated car itself are represented by object description models (ODMs) 210, 212, 214, 216.

The ODM can in particular be configured to provide a set of position data that show where the actual position of a respective object could be, in case this is not known because of measurement noise, communication delay and/or low model confidence. The respective sets of possible positions are shown as ovals. In the direction of motion, the oval is longer, since the velocity in this direction is larger and so is the position uncertainty. In the other directions the oval is smaller showing that the digital-twin-system is more certain about the actual position of the object. The position of pedestrians 216 are shown without an oval because they can be captured rather precisely, in particular because pedestrians move rather slow, and their phone signal might be accurate enough. Additionally or alternatively, pedestrians can also be modelled by one or more ODMs. ODMs also differ for vehicles 210, 212, and 214 because they represent different vehicle types, indicated by the symbol colors black, white, and grey.

An ODM can be handcrafted based on expert knowledge. Additionally or alternatively, an ODM may be auto generated, in particular based on artificial intelligence and/or based on the data, which is known about a certain object, in particular based on earlier information being measured.

In another, not depicted alternative, the detected vehicle location in the view of the remote driver at the teleoperator side is shown by symbols. Two, in particular grey, vehicle symbols correspond to the possible vehicle locations based on the tracking estimation uncertainties in the length dimensions x and y. Another, in particular black, vehicle symbol can additionally represent the most likely location of the vehicle.

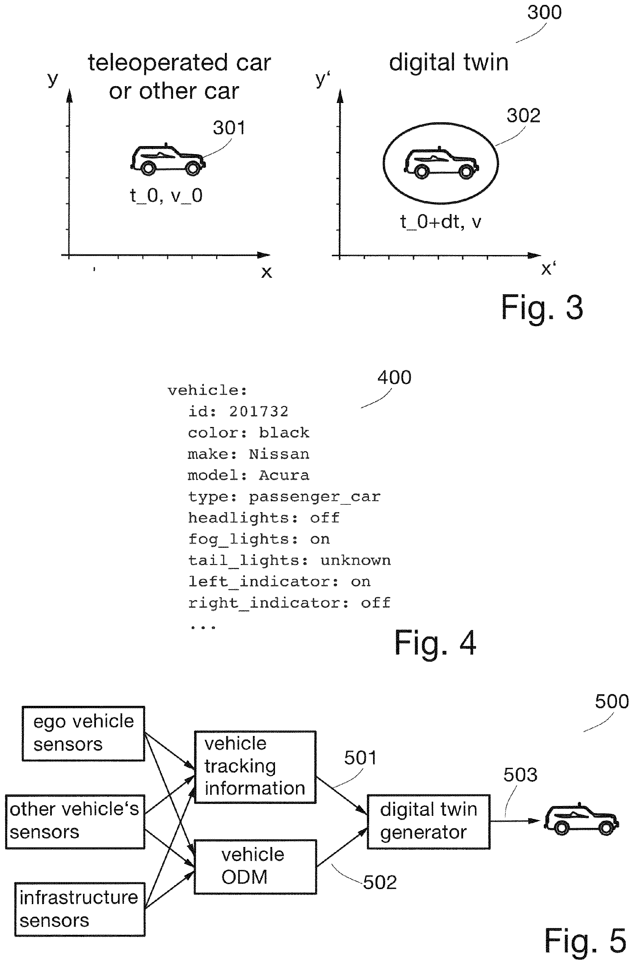

Fig. 3 shows how a delay compensation can be implemented in the digital-twin-system. At the operator workstation or at the digital-twin-system, communicated data from the vehicle can be merged with data available from other sources, such as HD maps and/or information from roadside infrastructure to provide a comprehensive telepresence environment to the teleoperator. When inserting, creating and/or moving dynamic objects the time delay can be considered for processing, sending, and rendering these dynamic objects in the digital twin and compensate for this delay. Thereby, the location and state of these objects are closer to their physical truth. Delays caused by processing can be considered as constants. Delays caused by the transmission can be measured (e.g. using timestamps).

A dynamic object 301 can be related to a probabilistic motion model. This can be e.g. a probabilistic mathematical algorithm explaining how the related object moves in the real world, e.g., based on a motion constrained Kalman Filter. The probabilistic model maintains the pose of the object and is updated with a new measurement, which also include the time delay. As such, the motion model can take the delay into account and estimate position-based data, e.g. a location, a pose and/or a velocity of the object more accurately than if the raw measurements were used.

Fig. 3 shows how a delay can be compensated in a cartesian setting 300 with x and y coordinates that represent an area in an environment. E.g., the delay can be a communication delay that afflicts information sent from the object 301 in the environment to the teleoperator side. The object 301 moves forward with a fixed velocity v_0 at time t_0. Assuming its location, direction of travel and its speed are detected and/or measured at time t_0 with negligible error, however with a delay dt when arriving or begin shown at the digital twin. If the delay is not compensated for, then the object 301 will be rendered at the location it was observed. However, since the object has been moving with a certain velocity, its location is somewhere else. Using a motion model, the object can be rendered at a location closer to its true location in the physical world. Thereby, the motion model might provide a set of potential positions 302.

Dynamic objects detected and/or tracked by the teleoperated object and/or by infrastructure sensors may not be completely accurate. Estimation uncertainties can propagate through the object detection and tracking systems and need to be handled by the digital twin system. The estimation uncertainties can consider the respective motion models for the dynamic objects and will be sent to the digital twin. The digital twin system can incorporate this information in the digital representation of the object by considering the type of the object (pedestrian, car, motorcycle, etc.). This is depicted by the oval circle 302 in the Fig. 3, which shows the possible area of the x-y-plane in which the actual position of the vehicle 301 can be.

Parametrically visualizing the uncertainties can be beneficial for the teleoperator for a driving task. The teleoperator can turn on/off uncertainties for a single, for all objects or for a subgroup of objects. To reduce the overload and distraction it can be desirable not to show the uncertainties always and for all objects. Instead, the digital twin can automatically turn on the uncertainty for an object that fulfils certain requirements. Such a requirement can be that the object is on collision course with the teleoperated vehicle.

The digital-twin-system can also make adaptations to the input command, e.g. to ensure a collision-free path. The following example can illustrate this. A teleoperated vehicle is in the turning lane at an intersection but has a longitudinal uncertainty of 2 m. The vehicle is represented in the middle of this uncertainly, which means it can be +/- 1m further into/away from the start of the intersection. The human operator starts turning "too early", such that some of the potential positions estimated by the motion model are equal to the positions of a static object, namely a curb. In this case, the digital-twin-system can delay the turn until the vehicle has progressed sufficiently so that none of the potential positions conflict with the position of the curb when turning the wheels of the car. Therefore, the digital twin can have a built-in trajectory planner and obstacle avoidance capabilities to support the teleoperator.

Fig. 4 illustrates an embodiment of an object description model (ODM) of a vehicle represented by a digital twin system. The ODM can comprise differentiated information about the vehicle, e.g., visual properties, kinematic properties and/or dynamic properties.

Fig. 5 depicts an information processing flow 500 for update of an embodiment of a digital twin system. At first information of an ego-vehicle is gathered. This can be a teleoperated vehicle or another vehicle (dynamic object). The information can be sourced from one or more of the ego vehicle's sensors, by one or more sensors from one or more other vehicles, and/or by sensors from one or more infrastructure sensors. The same information sources can be used to track the motion and the type of one or more other vehicles in the environment of the ego-vehicle. Firstly, the information is processed to obtain information to track the position of the ego-vehicle and one or more vehicles in the environment of the ego vehicles. Secondly, the information is used to determine an ODM of one or more of the vehicles in the environment of the ego vehicle. This information is input in the digital twin system in order to generate a digital twin of the real driving situation. Thereby, the vehicle tracking information is fused 501 before being further processed in the digital-twin-system. Furthermore, the estimated information of the different vehicles ODMs can also be fused 502 before being processed together with the vehicle tracking information. All information together is then processed 503 for a digital representation of the ego-vehicle and its surroundings.

The digital-twin-system can further comprise two subsystems, an update interface, and a telepresence interface. The update interface handles the update of information for the digital twin. An object of the update interface can be to determine which data should be sent and how often it should be sent from the teleoperated vehicle to the teleoperator. The operation of the update interface can be based on network bandwidth constraints and/or the quality of telepresence should be considered. If too little information is transmitted, the teleoperator may not be able to perceive the situation correctly. If more information is transmitted than can be transmitted, a bottleneck will occur resulting in delay. This may prevent timely decisions. The update interface can instruct the objects to provide information at selected update rates and/or it can provide information about the teleoperated object, and the dynamic and static objects at selected update-rates. The more important a static or dynamic object is for a teleoperated object the higher an update rate for information of this object can be. An update frequency can be 1000 Hz, 500 Hz, 100 Hz, 10 Hz, 1 Hz or 0,1 Hz.

Information about the ego-vehicle and/or any other objects in the ego vehicles environment can be communicated independently and/or differently. In one embodiment the selection of how frequently an object's state is determined and/or transmitted is dependent on how fast (or how randomly) the object moves.

For example a dynamic object that is standing still or moving rather slow (e.g. <1 km/h, <5 km/h or <10 km/h) need not to be updated very often. Often the update will not provide new status information but will only confirm that the dynamic object is still standing or moving slow. On the other hand, a dynamic object that is moving at a high velocity (e.g. >5km/h, >10 km/h or >20 km/h), has high variability in its speed and/or cannot be captured by available motion models can be updated more frequently. An example for the latter categories can be a bicycle rider driving between cars. At any time it might slow down or stop, or overtake a vehicle from the inside or outside. Using object-dependent update regimes can reduce necessary communication bandwidth when providing information for a sufficiently realistic digital twin.

An update frequency can further be based on a motion model confidence. If the dynamic object is moving as expected by the motion model, then the detections will be close to the motion model predictions. However, if the detections are not frequent enough or differ from the predictions, then the model confidence will decrease. Updating models with new detections will increase the confidence. Additionally or alternatively, the motion model used for a certain object may be updated if the motion model confidence is too low and/or the predictions are more accurate with a motion model from another type of motion model. For example an object which is initially modelled as a bike can be modelled by a motorcycle, if measurements can be better predicted with a model of a motorcycle than with a model of a bike. Therefore, objects with lower motion model confidence can be updated more often.

The telepresence interface of the digital-twin-system can determine how the information gathered from various sources and the digital twin is displayed to the teleoperator. Telepresence interface is not only about providing as high-quality video as possible to the teleoperator, but can also relate to enhancing the experience beyond, for example, by overlaying additional information such as objects outside the line of sight. Additionally or alternatively, the overarching goal of a telepresence interface can be to provide a high level of situational awareness to the teleoperator. It can achieve this by not only providing as accurate digital representation of the teleoperated object and its environment as possible but also enhancing the situational awareness in other ways, for example, by overlaying additional information such as objects outside the line of sight and/or by depicting the environment with its object in an artificial perspective, e.g. an perspective from above, in particular with one or more object being shown as schematized objects.

The telepresence interface of the digital-twin-system can recreate the scene from HD maps and by spawning objects on the reported positions. This can drastically reduce the required bandwidth as no video is being streamed. Furthermore, it can also reduce the processing latency due to lesser volume of data and transmission latency in bandwidth-limited communication channels.

## Claims

1. A computer-implemented digital-twin-system (110) for teleoperation of an object, TO-object (104), in an environment with static objects (109) and dynamic objects (106, 108), configured to:
- obtain environment information comprising information about a TO-object, about one or more static objects and about one or more dynamic objects, wherein the information about the TO-object (104) and of at least one of other objects is obtained from different information sources (114, 116, 118);
- provide information about the TO-object and one or more of the dynamic objects related to one or more of the static objects to a teleoperator interface (122);
- obtain control information for the TO-object from the teleoperator interface based on the provided information;
- provide a control input to the TO-object based on the environment information and/or on the control information.

2. The digital-twin-system (110) according to any of the preceding claims, configured to assign an object description model, ODM (400), to the TO-object (104), to one or more of the static objects (109) and/or to one or more of the dynamic objects (106, 108).

3. The digital-twin-system (110) according to the preceding claim, configured to assign a first ODM (400) to a first object and a second ODM (400) to a second object.

4. The digital-twin-system (110) according to one of the two preceding claims, configured to generate one or more of the ODMs (400) on previous information obtained about the one or more static objects and/or the one or more dynamic objects (106, 108).

5. The digital-twin-system (110) according to one of the three preceding claims, configured to assign a second ODM (400) to the TO-object or to one or more of the static objects and/or one or more of the dynamic objects (106, 108).

6. The digital-twin-system (110) according to any of the preceding claims, configured to:
- obtain information about a first dynamic object with a lower update frequency than about a second dynamic object; and/or
- provide information to the teleoperator interface about a first dynamic object with a lower update frequency than about a second dynamic object (106, 108).

7. The digital-twin-system (110) according to any of the preceding claims, configured to estimate position-based information about the TO-object and/or about one or more of the dynamic objects based on a communication delay, on a measurement accuracy, and/or on a model confidence of the ODM (400).

8. The digital-twin-system (110) according to the preceding claim, configured to provide control information to stop the TO-object, if:
- a distance between the estimated positions of the TO-object and about a static and/or a dynamic object falls below a pre-defined threshold or is zero.

9. The digital-twin-system (110) according to any of the preceding claims, configured to
update environment information about one or more of the dynamic objects to the teleoperator interface based on:
- position-based information, in particular velocity information, of a respective dynamic object;
- a measurement accuracy and/or a communication delay related to the measured information about a respective dynamic object;
- a model confidence of the ODM (400) assigned to a respective dynamic object.

10. The digital-twin-system (110) according to any of the preceding claims, configured to be located near or at the teleoperator interface, in particular in the same network domain and/or on the same computer.

11. The digital-twin-system (110) according to any of the preceding claims, configured to be located distant from the teleoperator interface, in particular at the TO-object, at a static object, and/or in a computer network cloud.

12. The digital-twin-system (110) according to any of the preceding claims, configured to provide a processed, in particular delayed, control information as control input to the TO-object.

13. The digital-twin-system (110) according to any of the preceding claims, configured to:
- obtain a status information of a communication channel between the digital-twin-system and at least one of the TO-object, the static objects, and the dynamic objects; and/or
- obtain a status information of a communication channel between the digital-twin-system and the teleoperator interface; and/or
- obtain a status information of a communication channel between the teleoperator interface and at least one of the TO-object, the static objects, and the dynamic objects.

14. The digital-twin-system (110) according to any of the preceding claims, configured to interface with an automatic motion control system, AMCS, of the TO-object and, in particular, to provide commands to the AMCS which:
- are addressed to a subsystem of the TO-object, e.g. a braking system, and/or
- comprise position-based information.

15. The digital-twin-system (110) according to any of the preceding claims, configured to provide information for a configurable perspective of the environment to the teleoperator interface.

16. The digital-twin-system (110) according to the preceding claim, wherein the information about a configurable perspective is dependent on:
- a velocity, of the TO-object;
- a maneuver performed by the TO-object
- a traffic situation in the environment;
- a distance between the TO-object and a static object and/or a dynamic object.

17. The digital-twin-system (110) according to any of the preceding claims, configured to provide information about the uncertainty of a position-based information about the TO-object and/or at least one of the other objects to the teleoperator interface.

18. A teleoperator interface (122) for displaying and receiving information to control a TO-object in a distant environment, configured to:
- obtain information from a computer-implemented digital-twin-system, about a TO-object, one or more static objects and/or one or more dynamic objects in a distant environment;
- providing control information to the digital-twin-system and/or to the TO-object to control the TO-object.

19. The teleoperator interface (110) of the preceding claim, configured to connect concurrently to the TO-object and/or to one or more of the other objects in the distant environment, to obtain information from the distant environment, in particular acoustic information, visual information and/or information about one or more dynamic and/or static objects.

20. A computer program product comprising computer-executable code that, when executed by a processor, causes the processor to:
- generate and operate a digital-twin-system according to any of the preceding claims.
